Europäisches Patentamt

(19) European Patent Office    (11) Numéro de publication: **0 113 291**

Office européen des brevets    **B1**

(12) **FASCICULE DE BREVET EUROPEEN**

(45) Date de publication du fascicule du brevet: **18.05.88**    (51) Int. Cl.⁴: **H 04 B 14/06,** H 04 L 27/14

(21) Numéro de dépôt: **83402525.6**

(22) Date de dépôt: **23.12.83**

(54) Procédé et dispositif d'interpolation de la parole dans un système de transmission de parole numérisée.

(30) Priorité: **28.12.82 FR 8221875**

(43) Date de publication de la demande:
**11.07.84 Bulletin 84/28**

(45) Mention de la délivrance du brevet:
**18.05.88 Bulletin 88/20**

(84) Etats contractants désignés:
**DE GB**

(56) Documents cités:
**EP-A-0 017 707**
**FR-A-2 405 601**
**FR-A-2 425 774**
**GB-A-2 025 176**
**GB-A-2 096 424**
**US-A-3 783 387**

(73) Titulaire: **THOMSON-CSF**
**173, Boulevard Haussmann**
**F-75379 Paris Cédex 08 (FR)**

(72) Inventeur: **Potage, Jean**
**THOMSON-CSF SCPI 173, bld Haussmann**
**F-75279 Paris Cedex 08 (FR)**
Inventeur: **Sidin, Philippe**
**THOMSON-CSF SCPI 173, bld Haussmann**
**F-75279 Paris Cedex 08 (FR)**

(74) Mandataire: **Turlèque, Clotilde et al**
**THOMSON-CSF SCPI 19, avenue de Messine**
**F-75008 Paris (FR)**

Courier Press, Leamington Spa, England.

EP 0 113 291 B1

## Description

L'invention se rapporte à la transmission de signaux de parole numérisés et plus particulièrement à un procédé, et au dispositif correspondant, d'interpolation de la parole dans un système de transmission de parole numérisée.

De nombreux besoins de transmission de téléphonie par voie radio existent actuellement tant pour les applications civiles que pour des applications militaires. La tendance est d'effectuer ces transmissions sous forme numérique, ce type de transmission permettant de regénérer les signaux, les codages, et permettant également un chiffrement numérique ou des traitements complexes du signal de parole.

Dans les gammes de fréquences utilisées, VHF et UHF, le codage de la parole est du type DELTA, c'est-à-dire un codage résultant d'une quantification différentielle du signal analogique sur deux niveaux donnant directement naissance au message numérique. Plusieurs variantes de ce codage sont utilisées; le débit le plus couramment utilisé étant 16 kbits/sec.

En transmission radio, de nombreux phénomènes viennent perturber la transmission. Dans les transmissions classiques type radiotéléphone, les transmissions se font à fréquence fixe et sont soumises à des paquets d'erreurs ou à des parasites impulsionnels, par exemple ceux créés par les moteurs de véhicules. Dans les transmissions radiotéléphone civiles ou militaires utilisant la saut de fréquence, un ensemble de fréquences est utilisé, chacune de ces fréquences servant de support de transmission pendant un temps bref appelé palier. Certains paliers peuvent être perturbés ou brouillés par la présence involontaire ou volontaire d'autres émissions sur la ou les fréquences correspondantes.

En présence de telles perturbations, le signal de parole codé DELTA est restitué avec des phénomènes transitoires très désagréables pour le confort d'écoute et rendant la transmission inintelligible lorsque la probabilité d'occurrence de ces phénomènes augmente.

Un dispositif de réduction d'erreurs en transmission numérique, est décrit dans la demande de brevet GB 2 025 176. Ce dispositif comporte un détecteur d'erreurs de code de transmission en ligne, c'est-à-dire branché à la sortie du décodeur, qui commande la transmission d'un signal issu d'un générateur d'impulsion à la place du signal décodé en cas de détection d'erreur, c'est-à-dire le remplacement du signal après décodage par une alternance de 0 et de 1 avant conversion numérique analogique. Un tel dispositif permet de supprimer le bruit mais ne permet pas de supprimer les discontinuités dans le signal analogique restitué.

La présente invention a pour objet de détecter la présence de perturbations et de réaliser un traitement adéquat en vue d'améliorer le confort d'écoute, à probabilité de brouillage donné, ou en vue d'augmenter le taux de brouillage admissible, pour un niveau de confort d'écoute jugé acceptable par un de détection mettant en oeuvre une détection de l'énergie en dehors de la bande de modulation du signal, avant décodage et une interpolation du signal analogique restitué par interpolation du signal lors de l'apparition d'une perturbation et après la cessation de cette perturbation.

Suivant l'invention, un procédé d'interpolation de la parole dans un système de transmission de parole numérisée mettant en oeuvre un procédé de modulation à bande étroite FSK préfiltrée, caractérisé en ce qu'il consiste:

— à détecter l'énergie reçue en dehors de la bande de modulation par un filtrage passe-haut de fréquence de coupure au moins égale à la fréquence la plus haute de la bande de modulation préfiltrée, pour former un signal de détection de perturbation à partir du signal reçu avant démodulation;

— à commander par le signal de détection de perturbation la transmission à l'entrée du circuit de décodage de parole soit de la séquence de données numériques reçues, soit d'une séquence prédéterminée permettant l'interpolation, du fait du décodage, du signal de parole restitué pendant la perturbation et après la cessation de la perturbation.

L'invention a également pour objet le dispositif d'interpolation de parole mettant en oeuvre ce procédé.

L'invention sera mieux comprise et d'autres caractéristiques apparaîtront à l'aide de la description qui suit en référence aux figures annexées.

— La figure 1 est le schéma d'un mode de réalisation du dispositif d'interpolation de parole suivant l'invention.

— La figure 2 est un diagramme de signaux illustrant le procédé suivant l'invention.

Dans les transmissions numériques de phonie par voie radio, le type de modulation utilisé est souvent une modulation à déplacement de fréquence, FSK, préfiltrée à l'émission pour atténuer les transitions brusques. En effet, ce type de modulation allie à la simplicité une propriété intéressante qui est celle du confinement du spectre dans une bande de fréquence étroite; ce qui permet de travailler dans des canaux de fréquences jointifs, peu espacés en fréquences. En présence d'un signal BF de débit inférieur ou égal à 16 Kbits/sec, il y a très peu d'énergie au-delà d'une fréquence de coupure $f_c$ ; $f_c$ vaut de l'ordre de 1,3 fois le débit soit 20 kHz pour un débit de 16 Kbits/s. Par contre, en présence de perturbations liées au brouillage, le comportement erratique du signal conduit à des transitions rapides et par suite à des composantes de fréquences supérieures à $f_c$.

Pour détecter la présence des perturbations, le procédé suivant l'invention consiste à détecter les composantes en dehors de la bande du signal utile, par un filtrage passe-haut de fréquence de coupure $f_c$. Lorsque la perturbation a été détectée, le traitement réalisé dans le dispositif suivant l'invention consiste à supprimer le bruit en remplaçant cette perturbation par un signal améliorant le confort d'écoute.

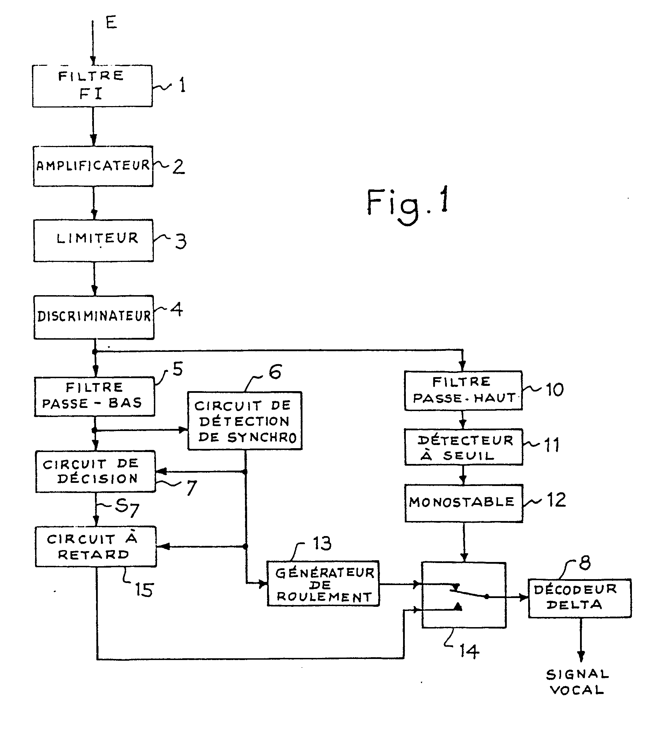

Le dispositif suivant l'invention, décrit ci-après en référence à la figure 1, comporte une chaîne classique de réception et de démodulation d'un signal de parole numérisé, codé en DELTA, et transmis en modulation FSK préfiltrée. L'entrée E, qui reçoit le signal à fréquence intermédiaire, est reliée à l'entrée d'un filtre à fréquence intermédiaire 1. La sortie de ce filtre est reliée à l'entrée d'un amplificateur à fréquence intermédiaire 2 dont la sortie est reliée à l'entrée d'un limiteur 3. La sortie du limiteur est reliée à l'entrée du discriminateur de fréquence 4, en série avec un filtre passe-bas de lissage dont la fréquence de coupure est $f_c$. La sortie de ce filtre passe-bas 5 est reliée à l'entrée d'un circuit de détection de la synchronisation bit, ce circuit détectant les passages par zéro du signal de sortie du filtre passe-bas 5. La sortie de ce filtre passe-bas est également reliée à l'entrée d'un circuit d'échantillonnage et de décision 7 ayant par ailleurs une entrée de commande d'échantillonnage reliée à la sortie du circuit de détection de synchronisation bit 6. Le circuit 7 donne la valeur numérique démodulée de l'élément binaire reçu. La sortie du circuit de décision 7 est couplée à l'entrée d'un décodeur DELTA 8 reconstituant, à partir de la suite numérique à la sortie du circuit de décision 7, le signal de parole sous forme analogique.

Pour la mise en oeuvre du procédé suivant l'invention, le dispositif d'interpolation de la parole comporte en outre un filtre passe-haut 10, de fréquence de coupure $f_c$ égale à la fréquence de coupure du filtre passe-bas 5. En l'absence de bruit ou de brouillage, le signal de sortie de ce filtre est pratiquement nul. Ce signal de sortie croît en fonction du niveau de bruit et en particulier en cas de brouillage ou de pointe de bruit. Dans ce cas un signal de niveau significatif est présent à la sortie du filtre passe-haut 10. La sortie de ce filtre est reliée à l'entrée d'un circuit détecteur à seuil 11, ce seuil étant le niveau à partir duquel on considère qu'il y a brouillage. Par exemple, ce seuil peut être le niveau moyen d'un signal de sortie correspondant à huit décibels de rapport signal à bruit. La sortie du circuit détecteur à seuil 11 est reliée à l'entrée d'un circuit monostable 12 dont la sortie est reliée à l'entrée de commande d'un commutateur à deux positions 14. Le monostable a pour rôle de mettre en forme le signal de sortie du circuit détecteur pour le rendre apte à commander l'aiguilleur.

La sortie du circuit de décision 7 est couplée à l'entrée du décodeur DELTA 8 par l'intermédiaire d'un circuit à retard 15 et de la première voie du commutateur 14, première entrée-sortie, cette sortie étant reliée à l'entrée du décodeur DELTA 8. Le circuit à retard 15 a une entrée d'horloge reliée à la sortie du circuit de détection de synchronisation bit 6.

Le circuit à retard 15 permet d'ajuster le temps de transit dans la voie de démodulation à la durée nécessaire à la détection des perturbations, de façon que la détection des défauts s'applique bien aux bits correspondants reconnus erronnés.

Dans le mode de réalisation représenté, le traitement réalisé pour supprimer le bruit pendant les perturbations consiste à substituer aux bits brouillés transmis dans la chaîne de réception une séquence de "roulements" formée par une alternance de 0 et de 1. Pour cela, la sortie du circuit de détection de synchronisation bit 6 est reliée à l'entrée d'un circuit générateur de roulement 13, dont la sortie est reliée à la seconde entrée du commutateur 14. Ainsi, lors de la détection de perturbations, le brouillage est remplacé par un roulement beaucoup plus acceptable à l'audition. En effet, l'expérience montre que la perception de la parole perturbée pendant des durées relativement longues, 0.5 à 10 ms par exemple, est peu affectée par ces perturbations si l'on peut supprimer le bruit pendant celles-ci, car le bruit est perceptible et rend l'audition désagréable bien avant que l'intelligibilité ne soit affectée.

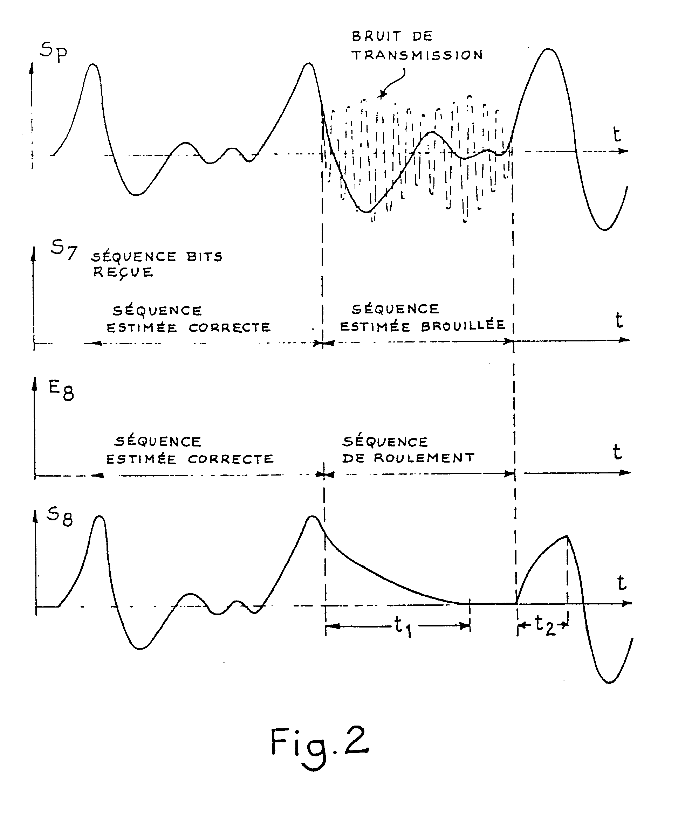

La figure 2 est un diagramme de signaux qui permet d'expliquer ce procédé.

Le premier signal représenté $S_p$ est le signal analogique de parole avant codage et modulation.

A la réception le signal modulé est traité l'amplificateur 2, le limiteur 3, le discriminateur 4 et le filtrage passe-bas 5. Le traitement en parallèle, par le filtre passe-haut, 10, et le détecteur à seuil 11, permet de déterminer si la séquence de bits reçue est "estimée correcte" ou "brouillée". Le monostable 12 qui commande le commutateur 14 associé au générateur de roulement 13, permet de remplacer la séquence de bits "estimée brouillée" par une séquence de roulement. Le signal à l'entrée $E_8$ du décodeur DELTA et donc constitué d'une succession de séquences estimées correctes et de séquences de roulement.

A la sortie $S_8$ du décodeur DELTA, le codage étant adaptatif, le signal de parole, à partir du niveau atteint à la fin de la séquence estimée correcte est progressivement ramené à un signal nul. A la fin du brouillage et lorsque le circuit monostable est revenu à son état initial, le signal de parole revient à sa valeur correcte sans discontinuité.

Cette variation progressive n'introduit pas de variation brusque de phase. En effet, dès réception d'une séquence de roulement 1, 0, 1, 0, ... ,le décodeur DELTA asservit sa pente à la valeur minimale puisqu'il n'y a plus que détection de 1 et de 0 successifs. De ce fait, quelle que soit l'amplitude du signal avant la réception des roulements, l'amplitude du signal tend vers 0 avec une constante de temps qui est elle de la boucle d'adaptation du décodeur DELTA, soit 4 ms environ. Dans le cas d'un tel décodage DELTA, le générateur de roulement 13 peut être une simple bascule de type D, dont la sortie inversée est reliée à l'entrée de signal; la sortie du circuit de détection de synchronisation bit, donnant le rythme d'horloge est reliée à l'entrée d'horloge de la bascule 13.

L'invention n'est pas limitée au mode de réalisation précisément décrit et représenté. En particulier, la description ci-dessus est illustrée par un exemple du système de transmission de parole par voie radio. Cet exemple n'est pas limitatif et le procédé d'interpolation s'applique également à un système de transmission par fils ou faisceaux hertziens. Ce procédé d'interpolation est particulièrement adapté à la transmission par paquets, les paquets brouillés étant remplacés par des séquences de roulement.

Dans le cas de la transmission de parole numérisée par voie radio utilisant pour la transmission des données numériques une modulation par déplacement de fréquence préfiltrée à l'émission, la détection du bruit en dehors de la bande utile est particulièrement efficace, puisqu'à l'émission il n'y a pas de composantes émises en dehors de la bande utile.

Enfin il est possible de décoder le signal numérisé DELTA sous forme ternaire de la façon suivante. La décision sur 1 bit donné tient compte du bit précédent, deux "1" successifs décodés "1", deux "0" successifs, décodés "−1"; alternance de bits successifs différents, décodés "0". La mise en oeuvre du dispositif d'interpolation est alors facilitée.

**Revendications**

1. Procédé d'interpolation de la parole dans un système de transmission de parole numérisée mettant en oeuvre un procédé de modulation à bande étroite FSK préfiltrée, caractérisé en ce qu'il consiste:

— à détecter l'énergie reçue en dehors de la bande de modulation par un filtrage passe-haut de fréquence de coupure au moins égale à la fréquence la plus haute de la bande de modulation préfiltrée, pour former un signal de détection de perturbation à partir du signal reçu avant démodulation;

— à commander par le signal de détection de perturbation la transmission à l'entrée du circuit de décodage de parole soit de la séquence de données numériques reçues, soit d'une séquence prédéterminée permettant l'interpolation, du fait du décodage du signal de parole restitué pendant la perturbation et après la cessation de la perturbation.

2. Dispositif d'interpolation de la parole dans un système de transmission de parole numérisée par voie radio en modulation FSK préfiltrée, destiné à la mise en oeuvre du procédé selon la revendication 1, comportant une chaîne de réception (1 à 4), un circuit de démodulation (5 à 7) avant une sortie démodulée ($S_7$) et un circuit de décodage (8), caractérisé en ce qu'il comporte un circuit de détection de perturbations pour détecter à la sortie de la chaîne de réception l'énergie reçue en dehors de la bande de modulation, comportant un filtre passe-haut (10), ayant une fréquence de coupure au moins égale à la fréquence la plus haute de la bande de modulation préfiltrée, la sortie de ce filtre étant reliée à l'entrée d'un circuit détecteur à seuil (11) dont le signal de sortie est un signal de détection de perturbations, et en ce qu'il comporte, entre la sortie démodulée ($S_7$) et l'entrée du circuit de décodage (8), un commutateur (14) dont une première entrée est couplée à la sortie démodulée ($S_7$) et dont la sortie est reliée à l'entrée du circuit de décodage (8), un générateur de séquence prédéterminée (13) dont la sortie est reliée à une seconde entrée du commutateur (14), le commutateur ayant une entrée de commande couplée à la sortie du circuit de détection de perturbations.

3. Dispositif selon la revendication 2, caractérisé en ce que, le signal de parole étant codé suivant un codage DELTA, la séquence prédéterminée est une séquence de roulement constituée d'une suite alternée de 0 et de 1 qui génère à la sortie du décodeur un signal décroissant progressivement à partir de l'apparition de la perturbation puis un signal croissant progressivement à partir de la cessation de la perturbation.

4. Dispositif selon la revendication 3, caractérisé en ce que, dans un système de transmission de phonie numérisée par codage DELTA, un décodage ternaire est utilisé.

**Patentansprüche**

1. Verfahren zum Interpolieren von Sprache in einem Übertragungssystem für digitalisierte Sprache, worin ein Verfahren zur schmalbandigen FSK-Modulation mit Vorfilterung angewendet wird, dadurch gekennzeichnet, daß es darin besteht:

— die Energie zu erfassen, welche außerhalb des Modulationsbandes empfangen wird, durch Hochpaß-Filterung mit einer Grenzfrequenz, die wenigstens gleich der höchsten Frequenz des vorgefilterten Modulationsbandes ist, um ein Störungs-Detektionssignal aus dem empfangenen Signal vor der Demodulation zu bilden;

— durch das Störungs-Detektionssignal die Übertragung entweder der Sequenz von empfangenen digitalen Daten oder aber einer vorbestimmten Sequenz, welche aufgrund der Decodierung die Interpolation des wiedergegebenen Sprachsignals während der Störung und nach Beendigung der Störung ermöglicht, zum Eingang der Sprach-Decodierschaltung zu steuern.

2. Sprachinterpolationsvorrichtung in einem Übertragungssystem für digitalisierte Sprache über Funk in FSK-Modulation und mit Vorfilterung, zur Durchführung des Verfahrens nach Anspruch 1, mit einer Empfangskette (1 bis 4), einer Demodulationsschaltung (5 bis 7), die einen Demodulationsausgang ($S_7$) aufweist, und einer Decodierschaltung (8), dadurch gekennzeichnet, daß sie eine Störungs-Detektionsschaltung umfaßt, um am Ausgang der Empfangskette die außerhalb des Modulationsbandes empfangene Energie zu erfassen, mit einem Hochpaßfilter (10), dessen Grenzfrequenz wenigstens gleich der höchsten Frequenz des vorgefilterten Modulationsbandes ist, wobei der Ausgang dieses Filters mit dem Eingang einer Schwellwert-Detektorschaltung (11) verbunden ist, deren Ausgangssignal ein Störungs-Detektionssignal ist, und daß sie zwischen dem Demodulationsausgang (S$_7$) und dem Eingang der Decodierschaltung (8) einen Schalter (14) aufweist, wovon ein erster Eingang mit dem Demodulationsausgang (S$_7$) gekoppelt ist und der Ausgang mit dem Eingang der Decodierschaltung (8) verbunden ist, und mit einem Generator (13) zur Erzeugung einer vorbestimmten Sequenz, dessen Ausgang mit einem zweiten Eingang des Schalters (14) verbunden ist, wobei der Schalter einen Steuereingang aufweist, der an den Ausgang der Störungs-Detektionsschaltung angekoppelt ist.

3. Vorrichtung nach Anspruch 2, dadurch gekennzeichnet, daß das Sprachsignal in DELTA-Codierung codiert ist und die vorbestimmte Sequenz eine Abrollsequenz ist, die aus einer abwechselnden Folge von 0 und 1 besteht, welche am Ausgang des Decodierers ein Signal erzeugt, das progressiv mit dem Erscheinen der Störung abnimmt, und dann ein Signal, welches ab der Beendigung der Störung progressiv zunimmt.

4. Vorrichtung nach Anspruch nach Anspruch 3, dadurch gekennzeichnet, daß in einem digitalisierten Tonübertragungssystem mit DELTA-Codierung eine ternäre Decodierung angewendet wird.

**Claims**

1. Method of interpolation of speech in a digitalized speech transmission system using a method of pre-filtered narrow-band FSK modulation, characterized in that it consists:
— in detecting the energy received outside of the modulation band by high-pass filtering with a cut off frequency which is at least equal to the highest frequency of the prefiltered modulation band to generate an interference detection signal from the received signal prior to demodulation;
— in controlling by the interference detection signal the transmission, to the input of the speech decoding circuit, either of the sequence of received digital data or of a predetermined sequence permitting the interpolation, because of decoding, of the restituted speech signal during the interference and after the termination of the interference.

2. Speech interpolation device in a digitalized speech radio transmission system using a prefilled FSK modulation, for performing the method according to claim 1, comprising a reception chain (1 to 4), a demodulation circuit (5 to 7) having a demodulated output (S$_7$) and a decoding circuit (8), characterized in that it comprises an interference detection circuit to detect at the output of the reception chain the energy received outside of the modulation band, comprising a high-pass filter (10) having a cut off frequency which is at least equal to the highest frequency of the pre-filtered modulation band, the output of this filter being connected to the input of a threshold detector circuit (11) the output signal of which is an interference detection signal, and in that it comprises, between demodulated output (S$_7$) and the input of the decoding circuit (8), a switch (14) a first input of which is coupled to the demodulated output (S$_7$) and the output of which is connected to the input of the decoding circuit (8), a predetermined sequence generator (13) having an output connected to a second input of the switch (14), and the switch having a control input coupled to the output of the interference detection circuit.

3. Device according to claim 2, characterized in that, the speech signal being coded according to a DELTA coding, the predetermined sequence is a rolling sequence made up of an alternating sequence of 0 and 1 which generates at the output of the decoder and from the moment of appearance of the interference a progressively reduced signal and, from the moment of disappearance of the interference, a progressively increasing signal.

4. Device according to claim 3, characterized in that, in a digitalized phonic transmission system using DELTA coding, a ternary decoding is used.

E

FILTRE
FI ~ 1

AMPLIFICATEUR ~ 2

Fig.1

LIMITEUR ~ 3

DISCRIMINATEUR ~ 4

FILTRE
PASSE - BAS ~ 5

CIRCUIT DE
DÉTECTION
DE SYNCHRO ~ 6

FILTRE
PASSE - HAUT ~ 10

CIRCUIT DE
DÉCISION ~ 7

DÉTECTEUR
À SEUIL ~ 11

~ S7

MONOSTABLE ~ 12

CIRCUIT À
RETARD

GÉNÉRATEUR
DE
ROULEMENT ~ 13

DÉCODEUR
DELTA ~ 8

~ 15

~ 14

SIGNAL
VOCAL

1

Fig.2